# FASCICULE DE BREVET EUROPEEN

(11) **EP 1 011 917 B1**
(45) Date de publication et mention de la délivrance du brevet: **10.04.2002**
(21) Numéro de dépôt: 98942830.5
(22) Date de dépôt: 04.09.1998
(51) Int. Cl.: B23Q 17/22, B23Q 11/00

(54) **MACHINE DE PREREGLAGE ET D'EQUILIBRAGE DE PORTE-OUTIL**
VORRICHTUNG ZUM VOREINSTELLEN UND WUCHTUNGSAUSGLEICHEN EINES WERKZEUGHALTERS
MACHINE FOR PRESETTING AND BALANCING A TOOL-HOLDER

(30) Priorité: 08.09.1997 FR 9711271
(43) Date de publication de la demande: 28.06.2000
(73) Titulaire: E.P.B., 67330 Bouxwiller (FR)
(72) Inventeur: FREYERMUTH, Alain, F-67350 Pfaffenhoffen (FR); OHMS, Klaus-Peter, D-64297 Darmstadt (DE); GRAF, Helmuth, CH-9436 Balgach (CH)
(74) Mandataire: Nuss, Pierre
(86) Numéro de dépôt international: FR9801901
(87) Numéro de publication internationale: WO9912703

(56) Documents cités:
- EP-A- 0 247 939
- EP-A- 0 849 035
- FR-A- 2 548 349
- JP-A- 2 131 867
- US-A- 3 280 865
- PATENT ABSTRACTS OF JAPAN vol. 098, no. 010, 31 août 1998 & JP 10 138093 A (KYORITSU SEIKI KK), 26 mai 1998

## Description

La présente invention concerne le domaine de l'environnement des machines-outils, en particulier des machines à commande numérique, des centres d'usinage, des machines ou ligne transfert, pour l'usinage à grande vitesse ou pour lesquelles il est nécessaire de prérégler et/ou mesurer et d'équilibrer les porte-outils mis en oeuvre, et a pour objet une machine de préréglage et d'équilibrage de porte-outil.

Il existe actuellement différents dispositifs permettant de mesurer un outil assemblé à son porte-outil Cependant, avec l'avènement de l'usinage à grande vitesse et des machines à vitesses de rotation de la broche de plus en plus importantes, il ne suffit plus de seulement mesurer l'outil, mais il faut également minimiser son balourd intrinsèque

On connaît également des machines à équilibrer encore appelées équilibreuses permettant de mesurer le déséquilibre d'une pièce. Ces machines sont généralement autonomes et très souvent spécifiques et non adaptées à l'équilibrage des porte-outils

Il en résulte la nécessité de manipuler les porte-outils et/ou les outils à plusieurs reprises, sur des machines différentes, pour accéder à toutes les informations nécessaires à la bonne connaissance de chaque porte-outil et/ou outil

La présente invention a pour but de pallier ces inconvénients en proposant une machine de préréglage et déquilibrage de porte-outil permettant la mesure des cotes d'un outil ainsi que la détermination du balourd résiduel d'un même porte-outil et/ou outil sans déplacement de celui-ci, en un processus unique.

Conformément à l'invention, la machine de prérèglage et d'équilibrage de porte-outil est essentiellement constituée par un bâti support muni d'une broche porte-outils unique rotative commune aux deux opérations de préréglage et d'équilibrage, c'est-à-dire de mesure dimensionnelle et de balourd du porte-outils, par une colonne de support d'un bras de mesure dimensionnelle, par une console d'affichage des mesures et par un capot de protection interdisant l'accès à la zone à risque lors de la rotation de la broche.

L'invention sera mieux comprise, grâce à la description ci-après, qui se rapporte à un mode de réalisation préféré, donné à titre d'exemple non limitatif, et expliqué avec référence aux dessins schématiques annexés, dans lesquels
la figure 1 est une vue en élévation de la machine, le capot de protection étant en position ouverte, et
la figure 2 est une vue en perspective de la machine

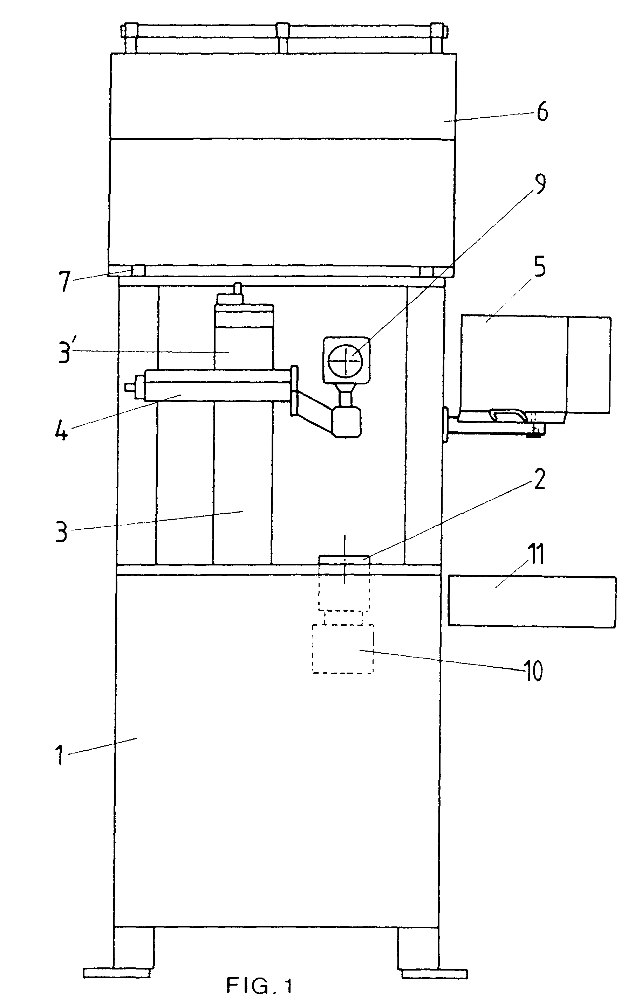

Les figures 1 et 2 des dessins annexés représentent, à titre d'exemple, une machine de préréglage et d'équilibrage qui est essentiellement constitué par un bâti support 1 muni d'une broche porte-outils 2 unique, rotative, par une colonne 3 de support d'un bras 4 de mesure dimensionnelle, par une console 5 d'affichage des mesures et par un capot de protection 6 interdisant l'accès à la zone à risque lors de la rotation de la broche 2.

Le bâti support 1 est avantageusement sous forme d'une structure mécano-soudée et le capot de protection 6 est monté avec possibilité de pivotement sur la partie supérieure dudit bâti support 1 par l'intermédiaire de charnières 7. Ce bâti support 1 comporte une zone centrale de travail, dans laquelle sont logés la broche porte-outils 2 et la colonne 3 de support d'un bras 4 de mesure dimensionnelle, la broche porte-outils 2 étant commune aux deux opérations de préréglage et d'équilibrage, c'est-à-dire de mesure dimensionnelle et de balourd du porte-outils.

De préférence, la broche porte-outils 2 est positionnée verticalement dans le bâti support 1, parallèlement à la colonne 3 de support du bras 4 de mesure dimensionnelle. Ce dernier est monté sur la colonne de support 3 avec possibilité de réglage, d'une part, en déplacement vertical par l'intermédiaire d'un chariot 3' et, d'autre part, perpendiculairement par rapport à ladite colonne 3 par coulissement sur ledit chariot 3'. Un tel montage du bras de mesure 4 permet son déplacement suivant deux directions perpendiculaires, autour du porte-outil à mesurer, sans nécessiter le moindre déplacement de ce dernier. Les moyens permettant un tel montage du bras de mesure 4 sont connus de l'homme de l'art et ne nécessitent pas une description détaillée particulière.

En outre, le bras de mesure 4 est pourvu, à son extrémité proche de l'axe vertical de la broche porte-outils 2, d'un projecteur de mesure 9. Un tel projecteur 9 est destiné à projeter les contours de l'outil sur un écran et permettant la mesure par relevé de données sur des règles de mesure prévues sur le bras 4 et la colonne 3. Ces données peuvent être transmises, soit directement à la console 5 d'affichage des mesures, soit à un ordinateur de traitement et de restitution de données.

La broche porte-outils 2 est entraînée en rotation par un moteur électrique 10 ou analogue. Ainsi, pour la mesure du balourd la broche 2 est entraînée, alors qu'elle est libre en rotation pour la mesure dimensionnelle. Cette broche porte-outil 2 peut être pourvue, en outre, de douilles d'adaptation interchangeables (non représentées) permettant la mesure et le réglage de porte-outils de dimensions différentes pour des machines différentes.

Selon une caractéristique de l'invention, le capot de protection 6 coopère avec des moyens de détection de fermeture, non représentés, prévus sur le bâti support 1 et autorisant l'enclenchement du moteur 10 d'entraînement de la broche 2 en position de fermeture dudit capot de protection 6. Ces moyens de détection de fermeture peuvent être constitués, de manière connue, sous forme de contacts normalement ouverts, de sorte que l'ouverture du capot 6 aura pour effet immédiat une coupure de l'alimentation du moteur 10. Pour parfaire la sécurité, le bâti support 1 peut être muni, en outre, d'un dispositif de verrouillage du type verrou mécanique, électromécanique ou autre, empêchant toute ouverture pendant le fonctionnement du moteur 10.

Par ailleurs, le bras 4 de mesure dimensionnelle et/ou la colonne de support 3 peuvent également être munis de contacts de fin de course de retrait (non représentés) empêchant toute mise en marche du moteur 10 d'entraînement de la broche 2 tant qu'ils ne sont pas actionnés. Ainsi, une mesure du balourd d'un porte-outil ne pourra être effectuée que si le bras 4 est complètement retiré dans sa position écartée de l'axe de la broche 2 et à une distance maximale du plan d'appui de cette dernière, à savoir dans la position représentée aux dessins annexés.

La mesure de balourd est donc effectuée le capot de protection 6 étant fermé et, éventuellement, verrouillé et le bras de mesure 4 avec le projecteur 9 étant en position dégagée. Pour la mesure dimensionnelle l'accès à la broche 2 et au bras de mesure 4 est nécessaire et se fait le capot de protection 6 étant basculé en position d'ouverture.

La console 5 d'affichage des mesures est fixée latéralement sur le bâti support 1, qui comporte, en outre, au moins une desserte 11 de réception de matériel informatique de saisie, d'impression et/ou de transmission de données, ainsi que de réception des petits outillages nécessaires aux différentes opérations.

Grâce à l'invention, il est possible de réaliser une machine de préréglage et d'équilibrage de porte-outils adaptée à un grand nombre de machines-outils ou de centres d'usinage ou analogue et permettant d'effectuer les deux opérations de préréglage et d'équilibrage sans démontage intermédiaire du porte-outil, ni changement de poste de réglage. Il en résulte un important gain de temps d'intervention et une simplification des procédures, toutes les caractéristiques d'un porte-outil pouvant être enregistrées simultanément au même poste de réglage.

En outre, l'invention permet également l'obtention d'un gain de place en atelier du fait de la combinaison de deux opérations distinctes, réalisées à ce jour sur des machines distinctes, sur une machine unique entraînant une réduction correspondante de la surface nécessaire.

Bien entendu, l'invention n'est pas limitée au mode de réalisation décrit et représenté aux dessins annexés. Des modifications restent possibles, notamment du point de vue de la constitution des divers éléments ou par substitution d'équivalents techniques, sans sortir pour autant du domaine de protection de l'invention.

## Revendications

1. Machine de préréglage et d'équilibrage de porte-outil, essentiellement constituée par un bâti support (1) muni d'une broche porte-outils (2) unique rotative commune aux deux opérations de préréglage et d'équilibrage, c'est-à-dire de mesure dimensionnelle et de balourd du porte-outils, par une colonne (3) de support d'un bras (4) de mesure dimensionnelle, par une console (5) d'affichage des mesures et par un capot de protection (6) interdisant l'accès à la zone à risque lors de la rotation de la broche.

2. Machine, suivant la revendication 1, **caractérisée en ce que** le bâti support (1) comporte une zone centrale de travail, dans laquelle sont logés la broche porte-outils (2) et la colonne (3) de support d'un bras (4) de mesure dimensionnelle.

3. Machine, suivant l'une quelconque des revendications 1 et 2, **caractérisée en ce que** la broche porte-outils (2) est positionnée verticalement dans le bâti support (1), parallèlement à la colonne (3) de support du bras (4) de mesure dimensionnelle.

4. Machine, suivant l'une quelconque des revendications 1 à 3, **caractérisée en ce que** le bras de mesure (4) est pourvu, à son extrémité proche de l'axe vertical de la broche porte-outils (2), d'un projecteur de mesure (9).

5. Machine, suivant l'une quelconque des revendications 1 à 3, **caractérisée en ce que** la broche porte-outils (2) est entraînée en rotation par un moteur électrique (10) ou analogue.

6. Machine, suivant l'une quelconque des revendications 1 à 3 et 5, **caractérisée en ce que** la broche porte-outil (2) est pourvue, en outre, de douilles d'adaptation interchangeables.

7. Machine, suivant la revendication 1, **caractérisée en ce que** le capot de protection (6) coopère avec des moyens de détection de fermeture prévus sur le bâti support (1) et autorisant l'enclenchement du moteur (10) d'entraînement de la broche (2) en position de fermeture dudit capot de protection (6).

8. Machine, suivant l'une quelconque des revendications 1 et 7, **caractérisée en ce que** le bâti support (1) est muni, en outre, d'un dispositif de verrouillage du type verrou mécanique, électromécanique ou autre, empêchant toute ouverture du capot de protection (6) pendant le fonctionnement du moteur (10).

9. Machine, suivant l'une quelconque des revendications 1 à 3 et 5, **caractérisée en ce que** le bras (4) de mesure dimensionnelle et/ou la colonne de support (3) sont munis de contacts de fin de course de retrait empêchant toute mise en marche du moteur (10) d'entraînement de la broche (2) tant qu'ils ne sont pas actionnés.

10. Machine, suivant la revendication 1, **caractérisée en ce que** la console (5) d'affichage des mesures est fixée latéralement sur le bâti support (1), qui comporte, en outre, au moins une desserte (11) de réception de matériel informatique de saisie, d'impression et/ou de transmission de données, ainsi que de réception de petit outillage.

## Patentansprüche

1. Maschine zum Voreinstellen und Wuchtungsausgleichen eines Werkzeughalters, im wesentlichen gebildet von einem Stützrahmen (1), der mit einer einzigen drehbaren Werkzeughalterspindel (2) versehen ist, die beiden Verfahren des Voreinstellens und des Wuchtungsausgleichens gemein ist, d.h. der Dimensions- und Unwuchtmessung des Werkzeughalters, von einer Stützsäule (3) eines Armes (4) zur Dimensionsmessung, von einer Anzeigkonsole (5) für die Messungen und von einer Schutzkappe (6), die den Zugriff auf den Gefahrenbereich bei der Drehung der Spindel verhindert.

2. Maschine nach Anspruch 1, **dadurch gekennzeichnet, daß** der Stützrahmen (1) einen zentralen Arbeitsbereich umfasst, in dem die Werkzeughalterspindel (2) und die Stützsäule (3) eines Armes (4) zur Dimensionsmessung angeordnet sind.

3. Maschine nach einem der Ansprüche 1 und 2, **dadurch gekennzeichnet, daß** die Werkzeughalterspindel (2) vertikal in dem Stützrahmen (1) parallel zur Stützsäule (3) des Armes (4) zur Dimensionsmessung angeordnet ist.

4. Maschine nach einem der Ansprüche 1 bis 3, **dadurch gekennzeichnet, daß** der Messarm (4) an seinem Ende nahe der Vertikalachse der Werkzeughalterspindel (2) mit einem Messprojektor (9) ausgestattet ist.

5. Maschine nach einem der Ansprüche 1 bis 3, **dadurch gekennzeichnet, daß** die Werkzeughalterspindel (2) in Drehung von einem Elektromotor (10) oder dergleichen angetrieben wird.

6. Maschine nach einem der Ansprüche 1 bis 3 und 5, **dadurch gekennzeichnet, daß** die Werkzeughalterspindel (2) ferner mit austauschbaren Anpassungshülsen versehen ist.

7. Maschine nach Anspruch 1, **dadurch gekennzeichnet, daß** die Schutzkappe (6) mit Mitteln zur Verschlusserfassung versehen ist, die auf dem Stützrahmen (1) vorgesehen sind und das Einschalten des Antriebsmotors (10) der Spindel (2) in der Verschlussposition der Schutzkappe (6) ermöglichen.

8. Maschine nach einem der Ansprüche 1 und 7, **dadurch gekennzeichnet, daß** der Stützrahmen (1) ferner mit einer Verriegelungsvorrichtung vom Typ mechanischer, elektromechanischer Riegel oder dergleichen versehen ist, der jede Öffnung der Schutzkappe (6) während des Betriebs des Motors (10) verhindert.

9. Maschine nach einem der Ansprüche 1 bis 3 und 5, **dadurch gekennzeichnet, daß** der Arm (4) zur Dimensionsmessung und/oder die Stützsäule (3) mit Rückzugendschaltern versehen sind, die jede Inbetriebsetzung des Antriebsmotors (10) der Spindel (2) verhindern, solange sie nicht betätigt wurden.

10. Maschine nach Anspruch 1, **dadurch gekennzeichnet, daß** die Anzeigekonsole (5) für die Messungen auf dem Stützrahmen (1) seitlich befestigt ist, welcher ferner zumindest einen Raum (11) für die Aufnahme einer informatischen Erfassungs-, Druckund/oder Datenübertragungsausrüstung sowie für die Aufnahme von Kleingeräten umfasst.

## Claims

1. Machine for presetting and balancing a tool-holder substantially consisting of a support frame (1) provided with a single rotary tool-holder spindle (2) common to the two presetting and balancing operations, in other words for measuring the dimensions and the lack of balance of the tool holder, a column (3) supporting a dimension-measuring arm (4), a console (5) displaying the measurements and a protective hood (6) preventing access to the risk area when the spindle is rotating.

2. Machine according to claim 1, **characterised in that** the support frame (1) comprises a central working area in which the tool-holder spindle (2) and the column (3) supporting a dimension-measuring arm (4) are housed.

3. Machine according to any one of claims 1 and 2, **characterised in that** the tool-holder spindle (2) is positioned vertically in the support frame (1) parallel to the column (3) supporting the dimension-measuring arm (4).

4. Machine according to any one of claims 1 to 3, **characterised in that** the measuring arm (4) is provided with a measuring projector (9) at its end close to the vertical axis of the tool-holder spindle (2).

5. Machine according to any one of claims 1 to 3, **characterised in that** the tool-holder spindle (2) is rotated by an electric motor (10) or similar.

6. Machine according to any one of claims 1 to 3 and 5, **characterised in that** the tool-holder spindle (2) is also provided with interchangeable adapting sockets.

7. Machine according to claim 1, **characterised in that** the protective hood (6) cooperates with means for detecting the closure provided on the support frame (1) and allowing the triggering of the motor (10) driving the spindle (2) into the closing position of said protective hood (6).

8. Machine according to any one of claims 1 and 7, **characterised in that** the support frame (1) is also provided with a locking device of the mechanical, electromechanical locking type or otherwise, preventing any opening of the protective hood (6) while the motor (10) is operating.

9. Machine according to any one of claims 1 to 3 and 5, **characterised in that** the dimension-measuring arm (4) and/or the support column (3) are provided with contacts for the limit of withdrawal travel preventing any start-up of the drive motor (10) of the spindle (2) when they are not actuated.

10. Machine according to claim 1, **characterised in that** the console (5) displaying the measurements is laterally fixed on the support frame (1) which also comprises at least one trolley (11) for receiving data inputting, printing and/or data transmission computer equipment and for receiving small tools.
